# EUROPEAN PATENT APPLICATION

(11) **EP 1 545 146 A2**
(43) Date of publication of application: **22.06.2005**
(21) Application number: 04029716.0
(22) Date of filing: 15.12.2004
(51) Int. Cl.: H04Q 7/38, H04L 12/28

(54) **Providing information in interworking between mobile communication network and wireless local area network**

(30) Priority: 16.12.2003 KR 2003091892; 11.02.2004 KR 2004009078
(71) Applicant: Samsung Electronics Co., Ltd., Suwon-si, Gyeonggi-do (KR)
(72) Inventor: Hwang, Sung-Oh, Yeongtong-gu Suwon-si Gyeonggi-do (KR); Song, O-Sok, Yeongtong-gu Suwon-si Gyeonggi-do (KR); van Lieshout, Gert Jan, Yeongtong-gu Suwon-si Gyeonggi-do (KR); Choi, Sung-Ho, Yeongtong-gu Suwon-si Gyeonggi-do (KR)
(74) Representative: Grünecker, Kinkeldey, Stockmair & Schwanhäusser Anwaltssozietät

(57) **Abstract**

A method and system for providing information on mobile communication network-WLAN interworking are provided. In the mobile communication network-WLAN interworking system, interworking WLAN information is broadcast from a mobile communication network to a dual terminal, which has a mobile communication network interface and a WLAN interface. Upon receipt of a broadcasting message including information on an interworking WLAN, the dual terminal turns on its WLAN module and periodically scans for a nearby WLAN in a power save mode. Upon receipt of a broadcasting message including no interworking WLAN information, the dual terminal turns off the WLAN module.

## Description

### BACKGROUND OF THE INVENTION

### 1. Field of the Invention

The present invention relates generally to inletworking between a mobile communication network and a wireless local area network (WLAN), and in particular, to a method and system for providing information on interworking between a mobile communication network and a WLAN.

### 2. Description of the Related Art

The rapid growth in the market of portable electronic products including portable computers and mobile phones over the last few years has driven active research on wireless access to a wired network such as an intranet or the Internet/world wide web (WWW). WLAN is known as an efficient technology that allows access to a wired network at high rate in a cost-effective manner.

Meanwhile, 3^{rd} generation (3G) mobile communication systems, including code division multiple access 2000 (CDMA 2000) systems, wideband code division multiple access/universal mobile telecommunication systems (WCDMA/UMTS), general packet radio systems (GPRS), and CDMA 2000 1xevolution data and voice (CDMA 2000 1xEV-DV) systems, enable high-speed data transmission on radio channels so that mobile stations (MSs) or other user equipment (UE) can access a packet communication networks (e.g., the Internet) over a cellular mobile communication network.

However, high-tech wireless access technology is very expensive. In this context, demands for research and development, and standardization of mobile communication networksand WLAN interworkingvia a dual terminal which can access both types of networks are increasing. The main purpose of the interworking is to provide mobile communication services over the inexpensive, large-capacity WLAN.

Compared to the mobile communication network, the WLAN as defined by the family of IEEE 802.11 standards does not use a paging channel to track down an accessible network, namely an access point (AP). The process of finding an AP accessible to an IEEE 802.11 dual terminal is called scanning. The WLAN scanning is performed using either an active scanning method or a passive scanning method as will be described herein below.

In the active scanning method, the terminal sends a probe signal to probe nearby APs. Upon receipt of the probe signal, the APs send the terminal response signals containing parameters required for access, to thereby allow the terminal to detect the presence of the accessible APs. Using active scanning, the terminal can search for accessible APs faster, but with a disadvantage being an increase in power consumption.

In the passive scanning method, APs transmit beacon signals which are used by the terminal to detect the presence of accessible APs. A beacon signal includes parameters necessary for the terminal to attempt to access the WLAN, so that the terminal can attempt to access a corresponding AP. Compared to the active scanning method, passive scanning takes less power, but takes more time for the terminal to scan for an AP and thus requires more time for the terminal to gain access to an AP.

For an IEEE 802.11 WLAN, the terminal experiences difficulty in finding an accessible WLAN, especially a WLAN that can interwork with a mobile communication network. When WLAN APs operate in different frequency bands, the terminal must send a probe signal on different frequency channels to scan for all available APs in the case of the active scanning, or scan for different frequency channels in order to receive beacon signals from APs in the case of the passive scanning. This causes an increase in the time required for searching for an AP in order access a WLAN.

Typically, the positions of WLAN APs are advertised to dual terminal users by TV commercials or the like, or signs are built at WLAN areas to allow the users to scan for the WLANs manually. However, these methods are not effective in notifying WLAN available areas, thus inconveniencing users.

### SUMMARY OF THE INVENTION

An object of the present invention is to substantially solve at least the above problems and/or disadvantages and to provide at least the advantages below. Accordingly, an object of the present invention is to provide a method and system for enabling a dual terminal to efficiently search for an interworking WLAN in a mobile communication network-WLAN interworking system.

Another object of the present invention is to provide a method and system for notifying a user of accessibility to an interworking WLAN when a dual terminal has found the interworking WLAN, so that the user can easily access the interworking WLAN.

A further object of the present invention is to provide a method and system for providing information on an interworking WLAN within a cell to a dual terminal via cell broadcasting over a mobile communication network.

Still another object of the present invention is to provide a method of providing information on a WLAN AP in a mobile communication network, upon request from a dual terminal.

Yet another object of the present invention is to provide a method of installing an entity for managing the position and standard information of WLAN APs to be provided to a dual terminal in a mobile communication base station (BS) or a core network (CN).

The above objects are achieved by providing a method and system for providing information on interworking between a mobile communication network and a WLAN.

According to one aspect of the present invention, in a method of transmitting interworking WLAN information in a mobile communication network-WLAN interworking system, the mobile communication network transmits interworking WLAN information by a broadcasting message to a dual terminal that can be connected to both a mobile communication network and a WLAN, and a connection is established between the dual terminal and the WLAN, upon request from the dual terminal.

According to another aspect of the present' invention, in a method of receiving interworking WLAN information in a mobile communication network-WLAN interworking system, a dual terminal, which can be connected to both a mobile communication network and a WLAN, receives from the mobile communication network a broadcasting message including interworking WLAN information, scans for a nearby WLAN in response to the broadcasting message, and notifies, if the WLAN is detected, a user of the presence of the WLAN accessible to the dual terminal.

According to a further aspect of the present invention, in a mobile communication network-WLAN interworking system, a mobile communication base station broadcasts a broadcasting message including interworking WLAN information about a WLAN spot within a cell, and a dual terminal scans for a nearby WLAN in response to the broadcasting message and notifies, if the WLAN is detected, a user of the presence of the WLAN accessible to the dual terminal.

### BRIEF DESCRIPTION OF THE DRAWINGS

The above and other objects, features and advantages of the present invention will become more apparent from the following detailed description when taken in conjunction with the accompanying drawings in which:
FIG. 1 is a diagram which illustrates a network configuration for mobile communication network-WLAN interworking according to a preferred embodiment of the present invention;
FIG. 2 is a block diagram of a dual terminal capable of connecting alternately to a mobile communication network and a WLAN according to an embodiment of the present invention;
FIG. 3 is a block diagram of a dual terminal capable of simultaneously connecting to the mobile communication network and the WLAN according to another embodiment of the present invention;
FIG. 4 is a diagram illustrating an example of a geographical distribution of the service areas of the mobile communication network and the WLAN;
FIG. 5 is a diagram illustrating the structure of a common traffic channel (CTCH) used for a cell broadcasting service (CBS);
FIG. 6 is a flow diagram illustrating an operation of an interworking system when a dual terminal is in an idle state according to a preferred embodiment of the present invention;
FIG 7. is a flowchart illustrating an operation in the dual terminal for connecting to an interworking WLAN in the idle state according to the preferred embodiment of the present invention;
FIG 8 is a flow diagram illustrating an operation of the interworking system when the dual terminal is in a traffic state according to the preferred embodiment of the present invention;
FIG 9 is a flowchart illustrating a handover operation of the dual terminal to the WLAN in the traffic state according to the preferred embodiment of the present invention;
FIG 10 is a table illustrating WLAN information included in a broadcasting message from the mobile communication network according to the preferred embodiment of the present invention;
FIG 11 is a table illustrating a signal flow between the mobile communication network and the dual terminal according to another preferred embodiment of the present invention; and
FIG 12 is a table illustrating a signal flow between the dual terminal and a CN according to a third preferred embodiment of the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

The present invention provides a method of providing WLAN interworking information to a dual terminal over a mobile communication network. Preferred embodiments of the present invention will be described in detail in the context of UMTS-IEEE 802.11 WLAN interworking: Moreover, it should be noted that the subject matter of the present invention is not limited to the UMTS-IEEE 802.11. WLAN interworking technology.

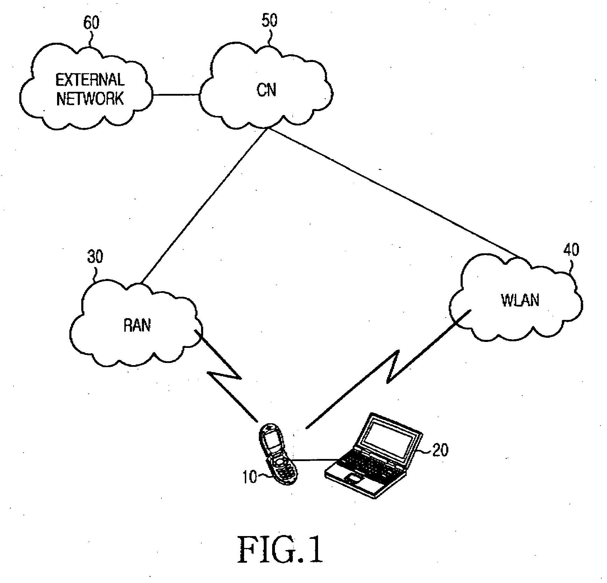

FIG 1 is a diagram which illustrates a network configuration for providing mobile communication network-WLAN interworking according to a preferred embodiment of the present invention.

Referring to FIG 1, a dual terminal (UE) 10 can be connected to both a cellular radio access network (RAN) 30 of the mobile communication network and a WLAN 40. The UE 10 provides a mobile Internet service to a user directly or via connection to a personal computer (PC) 20. The RAN 30 and the WLAN 40 are connected to an external network 60 such as the Internet or the public switched telephone network (PSTN) through a CN 50. While not shown, the CN 50 includes network entities such as an authentication, authorization and accounting (AAA) server, a home location register (HLR) for managing user profiles, and a gateway node, in order to support services for user terminals connected to the RAN 30 and the WLAN 40.

The WLAN 40 can form a business intranet, for example. While not shown, the WLAN 40 can be composed of at least one wireless AP and one or more fixed terminals (e.g., PCs) connected to one another via a typical network such as an Ethernet. The AP is similar to a typical network adaptor card used for interfacing between a fixed terminal and a WLAN, except that it establishes a radio connection with a UE 10 using a radio frequency (RF) bandwidth.

The RAN 30 is typically capable of voice and data communications. It uses a radio interface based on Code Division Multiple Access (CDMA), time division multiple access (TDMA) or frequency division multiple access (FDMA) methods. The RAN 30 includes a base station (BS) (not shown) that supports transmission and reception of radio signals to and from the UE 10. The RAN 30 can operate in a 3G mobile communication system such as CDMA 2000, WCDMA/UMTS, GPRS, or CDMA 2000 1xEV-DV. When it operates for UMTS, it is called a UTRAN.

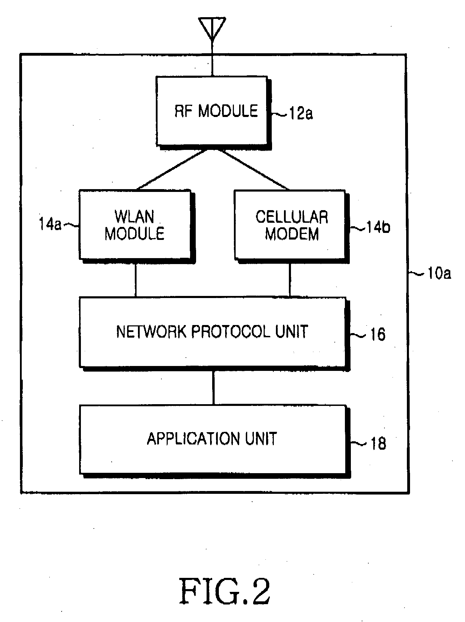

FIG. 2 is a block diagram of a UE capable of connecting alternately to the mobile communication network and the WLAN according to an embodiment of the present invention.

Referring to FIG 2, a UE 10A is composed of an RF module 12A for operating in both the frequency bands of the mobile communication network and the WLAN, a WLAN module 14A for interfacing with the WLAN, a cellular MODEM 14B for interfacing with the mobile communication network, a network protocol unit 16 for protocol conversion in a network layer, and an application unit 18 for user interfacing.

The RF module 12A receives an RF signal in one of the frequency bands of the two networks according to an operation mode and provides it to the WLAN module 14A or the cellular modeml4B. This UE configuration simplifies the RF part relatively, but makes simultaneous access to the mobile communication network and the WLAN impossible.

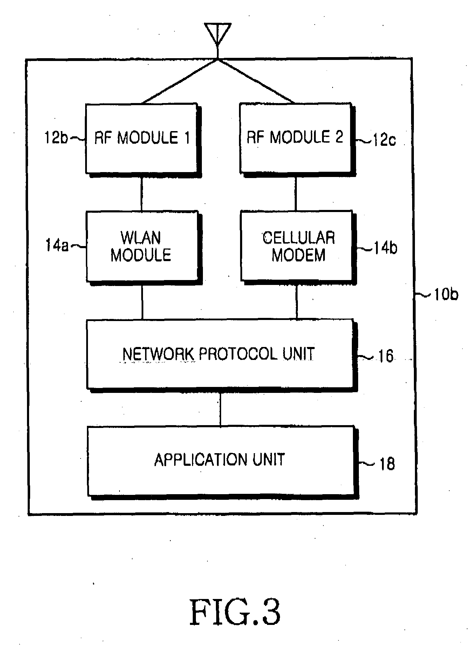

FIG. 3 is a block diagram of a UE capable of simultaneously connecting to the mobile communication network and the WLAN according to another embodiment of the present invention.

Referring to FIG 3, a UE 10B is composed of an RF module 12B (RF module 1) for processing in the frequency band of the WLAN, an RF module 12C (RF module 2) for processing in the frequency band of the mobile communication network, a WLAN module 14A for interfacing with the WLAN, a cellular MODEM 14B for interfacing with the mobile communication network, the network protocol unit 16 for protocol conversion in a network layer, and the application unit 18 for user interfacing.

The RF module 12B receives an RF signal in the frequency band of the WLAN and provides it to the WLAN module 14A. The RF module 12C receives an RF signal in the frequency band of the mobile communication network and provides it to the cellular MODEM 14B. Therefore, the UE 14B can activate the mobile communication network interface and the WLAN interface at the same time.

Although the mobile communication network usually covers a wide area, services from the WLAN are not available in the wide area. An IEEE 802.11 a/b/g terminal accesses a WLAN via an AP. One AP usually covers a range of 50m or less. On the other hand, one cell covers a very wide area which ranges from several kilometers to tens of kilometers in the mobile communication network.

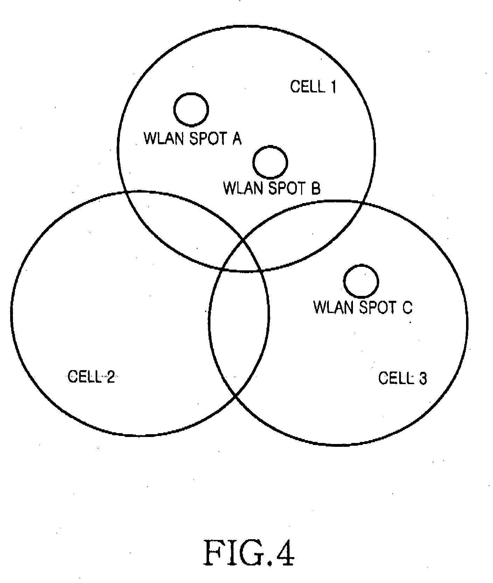

FIG. 4 illustrates an example of a geographical distribution of the service areas of the mobile communication network and the WLAN. As illustrated in FIG. 4, one cell of the mobile communication network may cover one or more WLAN spots. Specifically, cell 2 covers no WLAN spots, whereas cell 1 covers WLAN spot A and WLAN spot B and cell 3 covers WLAN spot C.

Since WLAN spots are small, a UE, which has no knowledge of the presence of a nearby WLAN spot, takes much time and expends power scanning for an accessible AP. Therefore, it is very inefficient to activate the WLAN interface all the time.

On the other hand, UE's receive broadcasting information continuously from the mobile communication network even in an idle state. Hence, in a preferred embodiment of the present invention, information on an interworking WLAN within a cell in which the UE is placed is provided to the UE by the broadcasting information from the mobile communication network.

The UE can find an interworking WLAN more efficiently by scanning for WLANs using the information received from the mobile communication network. After finding the interworking WLAN, the UE notifies a user of the presence of the interworking WLAN by vibrations, bell sounds, an icon, or the like, so that the user can select to receive a packet data service over the high-speed, low-cost WLAN.

Embodiments of the present invention regarding transmission of interworking WLAN information will be described below in the context of UMTS-IEEE 802.11 interworking.

In an embodiment of the present invention, a system information block (SIB) for UMTS is used.

The European CDMA mobile communication system based on global system for mobile communications (GSM), UMTS uses a primary common control physical channel (P-CCPCH) and a secondary common control physical channel (S-CCPCH) to send common information required to provide communication services such as cell configuration information. The P-CCPCH delivers system information related to a cell that a UE enters by cell selection in SIBs. That is, a UE which does not have a dedicated channel (DCH) receives SIBs broadcast on the P-CCPCH and stores necessary information in order to receive a service from a cell.

The P-CCPCH delivers one master information block (MIB) and two SIBs every 80ms. The MIB contains system scheduling information (i.e. scheduling information of each SIB) and information indicating whether system information has been changed. There are a total of 18 SIBs containing information required for system access.

For example, SIB 1 includes CN-related information such as timer values and counter values, SIB 2 includes the ID of a UTRAN registration area (URA) to which the cell belongs, SIB 3 and SIB 4 contain parameters for cell selection and reselection, and SIB 5 and SIB 6 include parameters for the configuration of common channels like a random access channel (RACH), a forward access channel (FACH), and a paging channel (PCH) in the cell. SIB 11 and SIB 12 contain information on neighboring cells to the UTRAN.

In the first embodiment of the present invention, SIB 11 or SIB 12 includes information on interworking WLANs within a cell under consideration. The interworking WLAN information includes the types of the WLANs (e.g., IEEE 802.11a. 11b or 11g), the frequency channels used, and WLAN IDs (e.g., service set identifiers ) set in WLAN beacon signals. For this purpose, SIB 11 or SIB 12 is to be correspondingly modified. An service set identifier (SSID) is a sequence of characters that uniquely names a WLAN. If a predetermined SSID is assigned to an interworking WLAN in relation to interworking between the WLAN and the mobile communication network, the UE identifies the interworking WLAN by its SSID.

In a second embodiment of the present invention, the interworking WLAN information is included in an unused SIB rather than in SIB 11 or SIB 12. Reception of the new SIB is limited to the UE capable of accessing the interworking WLANs within the RAN. Thus, a legacy terminal that can access only the RAN is relieved of the constraint of receiving the interworking WLAN information.

In a third embodiment of the present invention, a cell broadcasting service (CBS) is used which broadcasts data to all terminals within a cell in the UMTS system. A message to be delivered by the CBS is generated in a cell broadcasting center (CBC) connected to a radio network controller (RNC) within the UTRAN via a so-called luBC interface. That is, the CBC generates a broadcasting message including the interworking WLAN information and transmits it through the UTRAN periodically. This embodiment can advantageously be implemented without modifying the UTRAN.

The CBC sends the broadcasting message to the RNC via the luBC interface. The RNC transmits the broadcasting message to all UEs within the cell on a CTCH being a logical channel, an FACH being a transport channel; and an S-CPCCH being a physical channel.

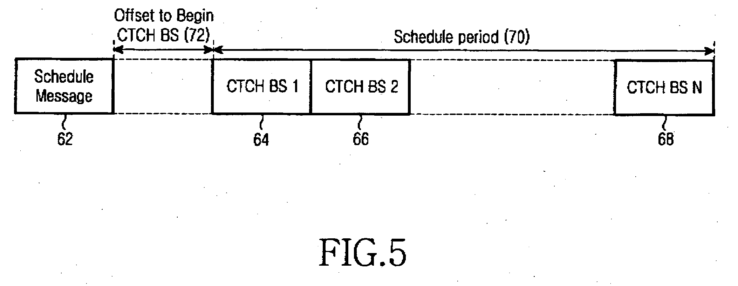

FIG. 5 illustrates the structure of the CTCH used for the CB S.

Referring to FIGc 5, one scheduling period 70 is composed of N CTCH block sets (BSs) 64 to 68. The total length of the N CTCH BSs 64 to 68 is equal to the CBS scheduling period known by a schedule message 62. The start of the scheduling period 70 is spaced apart from the schedule message 62 by an Offset to Begin CTCH BS 72. The CTCH BSs include message descriptions in a one-to-one correspondence. A message description includes a Message Description Type related to a CTCH as. The Message Description Type is set to a predetermined value that describes the type of the CTCH as. In a preferred embodiment of the present invention, Message Description Type 9" is mapped to interworking WLAN information.

Upon receipt of the schedule message 62, UEs determine the start and end of the CTCH BSs 64 to 68 using the Offset to Begin CTCH BS 72 and the scheduling period 70. Also, they determine the position of a CTCH BS having a Message Description Type 9 by interpreting the Message Description Types of the message descriptions included in the message, and selectively receive the CTCH BS.

In a fourth embodiment of the present invention, instead of an SIB or broadcasting information, a 1-bit indicator indicates to the UE whether an interworking WLAN is in the cell. In this case, modification to the the mobile communication network standards is minimized and the WLAN interface circuit of the UE can be turned off in a cell without any interworking WLANs. However, when the WLAN interface circuit is not turned off, as the UE has no information required for accessing an interworking WLAN, it needs to scan for the WLAN thus consuming time and power.

In a fifth embodiment of the present invention which is similar to the fourth embodiment with a difference being that the UE, which has received the 1-bit indicator, directly requests the UTRAN of the mobile communication network for detailed information about APs within the cell to which the UE belongs. This embodiment reduces the amount of broadcasting information and allows the UE to efficiently select an AP.

In a sixth embodiment of the present invention which is similar to the fourth embodiment, with a difference being that the UE, which has received the 1-bit indicator, directly requests the CN of the mobile communication network for information on the APs within the cell. This embodiment enables simultaneous operations as to verifying the subscription of the UE and authenticating the UE, while benefitting from the advantages of the fifth embodiment.

Hereinbelow, the operation of the UE regarding UMTS-IEEE 802.11 interworking will be described.

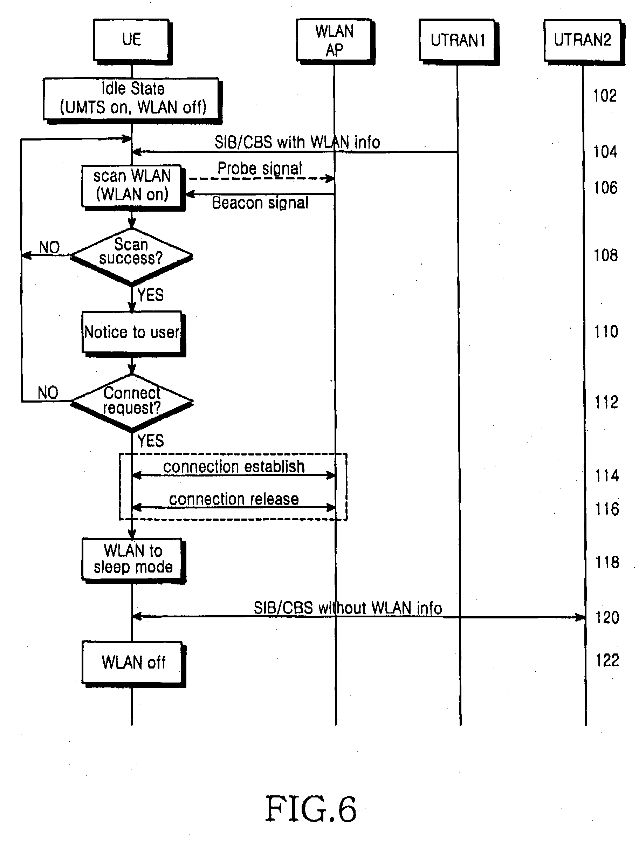

FIG 6 is a flow diagram illustrat in detail the operations of the UE, the mobile communication network, and the WLAN when the UE moves to a WLAN spot with no connection established between the UE and the mobile communication network according to a preferred embodiment of the present invention. Specifically, the operations of a UTRAN and a WLAN AP are described.

Referring to FIG. 6, upon initial power-on or when a call is ended, the UE enters into an idle state in step 102. In the idle state, power is supplied only to the UMTS module of the UE, with its WLAN module turned off. The UMTS module corresponds to the cellular MODEM 14B in the UE structure of FIG 2, whereas it corresponds to the RF module 12C and the cellular MODEM 14B in the UE structure of FIG 3. The WLAN module corresponds to the WLAN module 14A in FIG 2, whereas it corresponds to the RF module 12B and the WLAN module 14A in FIG 3.

If the UE hands over to UTRAN 1 covering an interworking WLAN spot, for example, cell 1 or cell 3 as illustrated in the example given with reference to FIG 4, the UE receives an SIB or CBS message from UTRAN 1 and recognizes the presence of the interworking WLAN in the cell where the UE is located by interworking WLAN information set in the received message in step 104.

After acquiring the interworking WLAN information from the message, the UE determines whether it can interwork with the WLAN referring to a standard type (e.g., 802.11a, 802.11b or 802.11g) and an SSID set in the interworking WLAN information. If the UE can, support the standard type of the WLAN, the UE supplies power to the WLAN module and scans for the WLAN in step 106.

In the case of active scanning, the UE sends a probe signal and listens for a beacon signal as a response signal. In the case of passive scanning, the UE listens for a beacon signal. Since the UE knows the presence of the interworking WLAN by the SIB or CBS message, the passive scanning method is preferred over the active scanning method.

In step 106, the UE periodically scans for the interworking WLAN, If it acquires interworking WLAN information by an SIB or CBS message, the UE can scan for the WLAN faster. More specifically, the UE can listen for beacon signals of a certain standard on frequency channels specified by the interworking WLAN information. Also, the UE determines a WLAN identified by an SSID set in the interworking WLAN information, to be an interworking WLAN.

If the UE is configured to be capable of simultaneously connecting to a mobile communication network and a WLAN as illustrated in FIG. 3, it scans for the WLAN, while being connected to the mobile communication network in step 106. On the other hand, if the UE is configured not to achieve simultaneous connections to both the networks as illustrated in FIG. 2, it scans for the WLAN in a discontinuous receive (DRX) mode for the mobile communication network.

It should also be noted that the UE transitions the WLAN module to a power save mode without turning it off between periodic scans. This is because time required to completely activate the WLAN module in supplying power to it for the next scan is reduced. The power save mode disables the WLAN module without turning it off as in a typical sleep mode, but has a longer sleep period ranging from several seconds to tens of seconds because users that desire access using the WLAN are less mobile. Typically, the WLAN module consumes a current of 300mA to 400mA for reception, 400mA to 500mA for transmission, and 3mA to 4mA in the power save mode.

In step 108, the UE determines whether the interworking WLAN has been detected. If the UE has not acquired the interworking WLAN information by the SIB or CBS message, it acquires the interworking WLAN information by accessing the detected WLAN and determines whether it can access the WLAN. If the UE cannot access the WLAN, it neglects the WLAN.

In step 110, the UE notifies the user of the presence of the interworking WLAN by any suitable means including bell sounds, vibrations or icons on a display etc. The notification method can be preset by the user. In step 112, the UE determines whether the user has requested access to the WLAN by any suitable means (e.g., by pressing a predetermined button or selecting a predetermined menu) . Upon request for an access to the WLAN, the UE establishes a connection with the WLAN and receives a service like the Internet service from the WLAN in step 114.

When the service is over and the connection is released from the WLAN in step 116, the UE transitions to a sleep mode in step 118. In the sleep mode, the UE periodically scans for a WLAN and determines whether to continuously notify the user of the presence or absence of a WLAN.

When the UE moves to UTRAN 2 in an idle state and receives an SIB or CBS message without Interworking WLAN information from UTRAN 2 in step 120, it turns off the WLAN module in step 122.

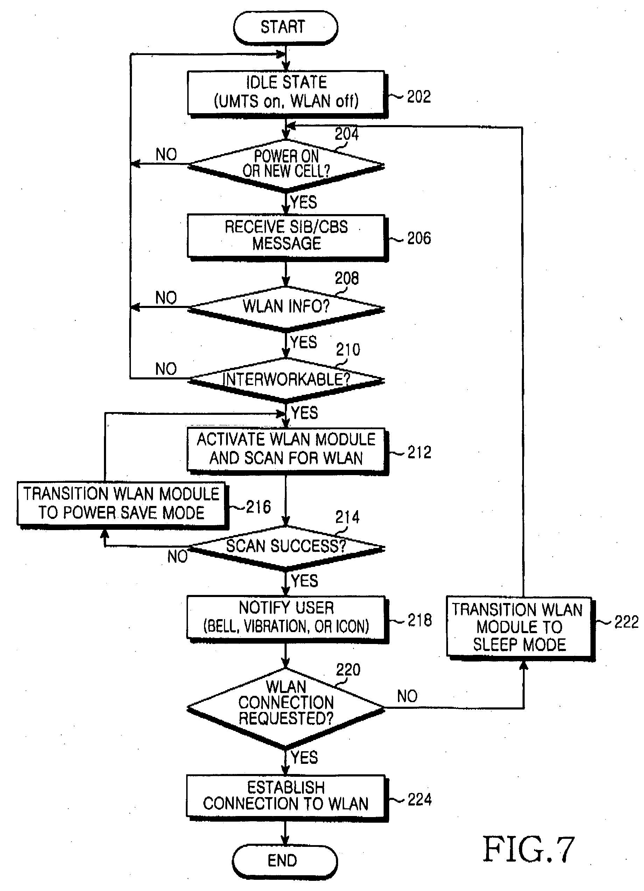

FIG. 7 is a flowchart illustrating an operation in the UE for connecting to an interworking WLAN in the idle state according to a preferred embodiment of the present invention.

Referring to FIG. 7, upon initial power-on, or when a call via the mobile communication network is ended, the UE enters into the idle state where it activates only the UMTS module with no power supplied to the WLAN module in step 202. If the UE is placed in the idle state shortly after power-on, or moves to a new cell in the idle state in step 204, it receives an SIB or CBS message from a UTRAN in step 206 and determines whether the received message includes interworking WLAN information to thereby determine the presence or absence of an interworking WLAN within the cell where the UE is located in step 208.

In the presence of an interworking WLAN in the cell, the UE determines by the interworking WLAN information included in the received message whether it can interwork with the WLAN in step 210 and scans for the WLAN by supplying power to the WLAN module in step 212.

If the UE's scan for the WLAN fails in step 214, the UE transitions the WLAN module to a sleep mode, that is, a power save mode for a predetermined time in step 216 and returns to step 212 the predetermined time later for attempting again to scan for the WLAN. Considering user mobility is very low in the case of an access to a WLAN, the period in which the UE recognizes the presence of the interworking WLAN and scanning for it, that is, the period of the WLAN module being in the power save mode may be lengthened from several seconds to tens of seconds or as otherwise desired.

If the UE successfully scans for the WLAN in step 214, it notifies the user of the presence of the WLAN by any available means (e.g., user-preset means (e.g.,such as bell sounds, vibrations, an icon on a display etc.). When the user presses a predetermined button or selects a predetermined menu in step 220, the UE accesses the WLAN and receives a service from the WLAN in step 224. If the user does not request an access to the WLAN in step 220, the UE maintains the WLAN module in the sleep mode in step 222.

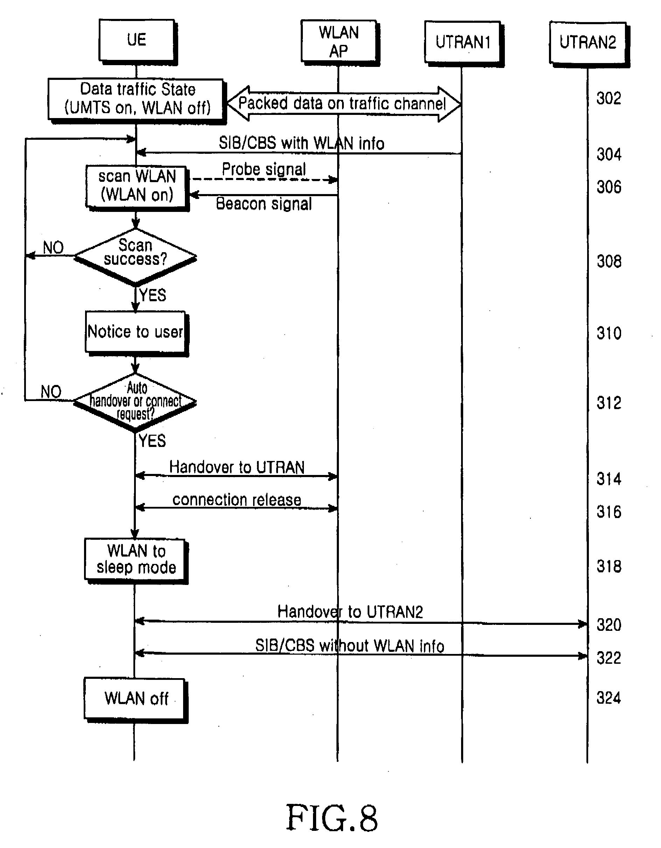

FIG 8 is a flow diagram illustrating operations of the UE, the mobile communication network, and the WLAN when the UE moves to a WLAN spot with a connection established between the UE and the mobile communication network according to a preferred embodiment of the present invention. If the UE has been connected to the mobile communication network, this means that it has been receiving a data service over the mobile communication network.

Referring to FIG 8, the UE establishes a traffic channel with UTRAN 1 and exchanges packet data with UTRAN 1 in a traffic state in step 302. In step 302, power is supplied only to the UMTS module, and power is not supplied to the WLAN module of the UE. The UMTS module corresponds to the cellular MODEM 14B in the UE configuration illustrated in FIG. 2 and the RF module 12C and the cellular MODEM 14B in the UE configuration illustrated in FIG 3. The WLAN module corresponds to the WLAN module 14A in FIG 2 and the RF module 12B and the WLAN module 14A in FIG 3.

If the UE is in UTRAN 1 covering a WLAN spot, for example, cell 1 or cell 3 in the case which is illustrated FIG 4, it receives an SIB or CBS message from UTRAN 1 and recognizes the presence of an interworking WLAN in the cell where the UE is located from interworking WLAN information set in the received message in step 304.

After acquiring the interworking WLAN information from the message, the UE determines whether the WLAN is interworkable referring to a standard type (e.g., 802. 11 a, 802.11b or 802.11 g) and an SSID in the interworking WLAN information. If it is interworkable, for example, if the UE supports the standard of the WLAN, the UE supplies power to the WLAN module and scans for the WLAN in step 306.

In step 306, the UE periodically scans for the interworking WLAN. If it acquires the interworking WLAN information by the SIB or CBS message, the UE can scan for the WLAN faster. Specifically, the UE can listen for beacon signals of a certain standard on frequency channels defined by the interworking WLAN information.

If the UE is configured to be capable of simultaneously connecting to a mobile communication network and a WLAN as illustrated in FIG 3, it scans for the WLAN, while maintaining the traffic state. On the other hand, if the UE is configured not to achieve simultaneous connections to both the networks as illustrated in FIG. 2, it scans for the WLAN in a DRX mode for the mobile communication network.

It is to be noted that the UE transitions the WLAN module to a power save mode without turning it off between periodic scans. This is because the time required to completely activate the WLAN module in supplying power to it for the next scan is reduced when in a power save mode. The power save mode disables the WLAN module without turning it off as is done in a typical sleep mode, but has a longer sleep period ranging from several seconds to tens of seconds.

In step 308, the UE determines whether the interworking WLAN has been detected, If the UE has not acquired the interworking WLAN information by the SIB or CBS message, it acquires the information by accessing the detected WLAN and determines whether it can access the WLAN. If the UE cannot access the WLAN, it neglects the WLAN.

In step 310, when it is determined that the UE can access the WLAN, the UE notifies the user of the presence of the interworking WLAN using any suitable means such as bell sounds, vibrations, icons on a display, etc. The UE determines whether an automatic handover has been set or the user has requested an access to the WLAN in step 312. If an automatic handover has been set or if a user has requested an access to the WLAN, the UE performs a handover from UTRAN 1 to the WLAN and receives a service from the WLAN in step 314.

When the service is over and the connection is released from the WLAN in step 316, the UE transitions to a sleep mode in step 318. In the sleep mode, the UE periodically scans for WLANs and determines whether to continuously notify the user of the presence or absence of an interworking WLAN.

In step 320, the UE hands over to UTRAN 2. Upon receipt of an SIB or CBS message without interworking WLAN information from UTRAN 2 in step 322, the UE turns off the WLAN module in step 324.

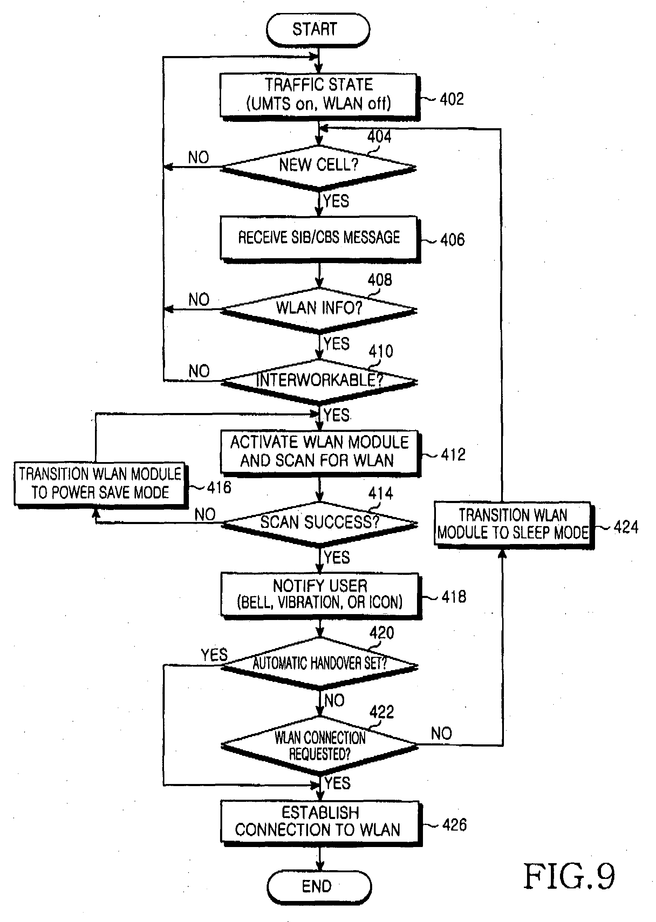

FIG. 9 is a flowchart illustrating a handover operation of the UE to the WLAN in a traffic state according to a preferred embodiment of the present invention.

Referring to FIG. 9, the UE activates only the UMTS module with no power supplied to the WLAN module during connections to calls and/or when receiving a data service over the mobile communication network in step 402. If the UE moves to a new cell in the traffic state in step 404, it receives an SIB or CBS message from a UTRAN in step 406 and determines whether the received message includes interworking WLAN information to thereby determine the presence or absence of an interworking WLAN within the cell where the UE is located in step 408.

In the presence of an interworking WLAN in the cell, the UE determines using the interworking WLAN information included in the received message that it can interwork with the WLAN in step 410 and scans for the WLAN by supplying, power to the WLAN module in step 412.

If the UE fails to scan for the interworking WLAN in step 414, it transitions the WLAN module to a sleep mode; (which is, a power save mode for a predetermined time) in step 416 and returns to step 412 the predetermined time later, for attempting again to scan for the WLAN. Considering user mobility is very low in the case of an access to a WLAN, the period in which the UE detects the presence of the interworking WLAN and scans for it, that is, the period of the WLAN module being in the power save mode may be lengthened as long as several seconds to tens of seconds.

If the UE successfully scans for the WLAN in step 414, it notifies the user of the presence of the WLAN around him by user-preset means (e.g., bell sounds, vibrations, an icon on a display, etc.) in step 418. If an automatic handover has been set, the UE can notify the user of the automatic handover without notifying the user of the presence of the WLAN in step 418.

In step 420, the UE determines whether the automatic handover has been preset. If it has, the UE automatically performs a handover to the detected WLAN without user input and continues receiving the packet data service in step 426. If the automatic handover has not been preset, the UE determines whether the user has requested an access to the WLAN in step 422. If the user has not requested an access to the detected WLAN, the UE maintains the WLAN module in the sleep mode and continues to receive the packet data service via the UTRAN in step 424. On the other hand, upon request for the access, the UE performs a handover to the WLAN and continues the packet data service in step 426.

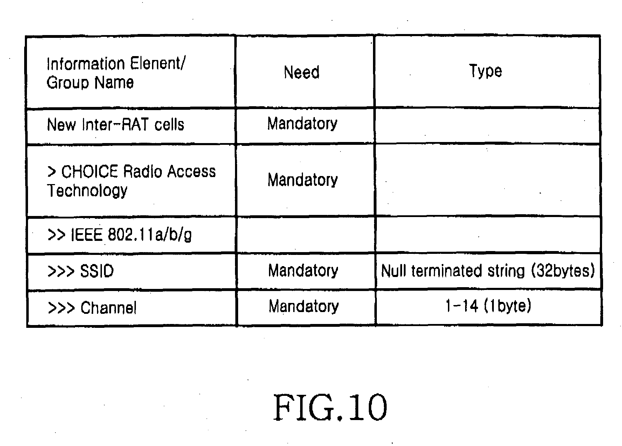

FIG 10 is a table illustrating information on an IEEE 802.11 WLAN included in a broadcasting message from the mobile communication network according to a predetermined embodiment of the present invention. The illustrated information is added to the Inter-RAT cell info list of SIB 11 or SIB 12.

Referring to FIG. 10, a New Inter-RAT cells field in SIB 11 or SIB 12 includes a CHOICE Radio Access Technology sub-field. The sub-field is composed of an information element indicating a WLAN type (e.g., an IEEE 802.11a, 802.11b, or an 802.11g type LAN), a 32-byte information element indicating an SSID, and a 1-byte information element that can represent 14 radio channels.

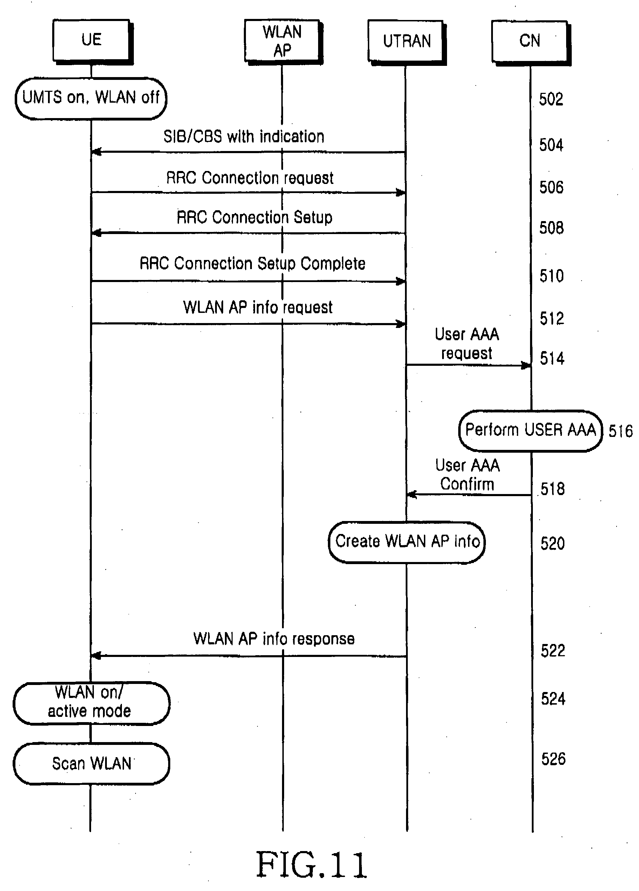

FIG. 11 is a diagram illustrating a signal flow for providing interworking WLAN AP information from a UTRAN to a UE according to another preferred embodiment of the present invention. This operation is related to the fifth embodiment of the present invention.

Referring to FIG. 11, the UE provides power only to the UMTS module, not to the WLAN module in an idle state or in a traffic state in step 502. In step 504, the UE receives an SIB or CBS message including a 1-bit indicator indicating the presence or absence of a WLAN AP within the cell where the UE is located, and recognizes the presence of the WLAN AP from the indicator.

To acquire information on the WLAN AP, that is, information on the standard that it supports, the UE transmits a Radio Resource Control (RRC) Connection Request message to the UTRAN in step 506. The RRC Connection Request message has the ID of the UE. It is used by the UE to notify the UTRAN of the UEs presence and to request radio resources to communicate with the UTRAN.

In step 508, the UTRAN determines whether to accept or reject the RRC connection request by checking the reason for the RRC connection request and the radio resources of the cell in which the UE is placed. If the RRC connection is available, the UTRAN transmits an RRC Connection Setup message to the UE. The RRC Connection Setup message includes information about radio resources allocated to the UE. In step 510, the UE establishes an RRC connection as indicated by the RRC Connection Setup message and transmits an RRC Connection Setup Complete message to the UTRAN, thereby completing the RRC connection setup.

After the RRC connection setup, the UE transmits a WLAN AP Info Request message to the UTRAN via the RRC connection, requesting information on WLAN APs within the cell area in step 512. The WLAN AP Info Request message includes the IDs of WLAN vendors to which the UE has subscribed and WLAN standards that the UE can support.

In step 514, the UTRAN transmits a User AAA Request message to the CN in response to the WLAN AP Info Request message. The User AAA Request message includes the ID of the UE and information on the WLAN venders that the UE has subscribed to. The CN performs a User AAA operation for the UE in step 516. The AAA is the process of identifying the user of the UE and determining whether the UE is authorized to use the WLAN. The AAA is performed by a separately procured entity for interworking between the HLR within the CN and the WLAN.

If the AAA is successful, the CN transmits a User AAA Confirm message to the UTRAN in step 518. In step 520, the UTRAN collects information on WLAN APs accessible to the UE and generates WLAN AP info based on the collected information. The WLAN AP info includes the SSIDs, frequencies, and wireless standards of the WLAN APs accessible to the UE. In step 522, the WLAN AP info is transmitted to the UE by a WLAN AP Info Response message.

After the UE activates the WLAN module in step 524, it scans for the WLAN referring to the WLAN AP info included in the WLAN AP Info Response message through the WLAN module in step 526. If the UE is configured as illustrated in FIG 3, it scans for the WLAN through the WLAN module, while keeping the UMTS module on. On the other hand, if the UE is configured as illustrated in FIG 2, it scans for the WLAN in a DRX mode of the mobile communication network.

While the WLAN Info Request message is used after the RRC connection setup in order to request the WLAN AP info in the procedure of FIG. 11, it can be further contemplated in an alternative embodiment that the RRC Connection Request message includes information indicating that the WLAN AP info is needed. In this case, the WLAN Info Request message is not sent in step 512 and the UTRAN performs the AAA operation on the UE immediately after receiving the RRC Connection Request message.

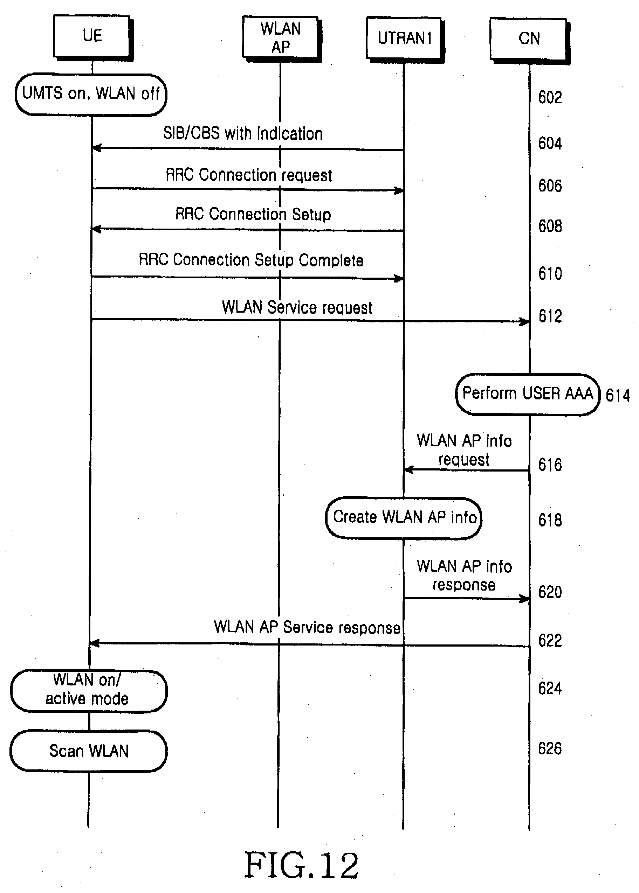

FIG. 12 is a flow diagram illustrating a signal flow for providing interworking WLAN AP information from the CN to the UE according to a third preferred embodiment of the present invention. This operation is related to the afore-described sixth embodiment of the present invention. The WLAN info request and AAA request from the UE are processed directly in the CN. Steps 602 through 610 illustrated in FIG. 12 are performed in the same manner as steps 502 through 510 illustrated in FIG. 11 and thus their description is not provided herein.

Referring to FIG 12, the UE transmits a WLAN Service Request message directly to the CN, requesting the AAA of the UE and its user and information on WLAN APs under coverage of the UTRAN in step 612. The direct transmission does not mean physically direct transmission -but-transparent passing of the WLAN Service Request message through the UTRAN. The WLAN Service Request message includes the ID of the cell in which the UE is located, the ID of the RNC that controls the cell, the IDs of the UE and its subscriber, the IDs of the WLANs to which the UE has subscribed, and WLAN standard types that the UE can support.

In step 614, the CN performs a User AAA operation on the UE in response to the WLAN Service Request message. The AAA is performed by a separately procured entity for interworking between the HLR of the CN and a WLAN.

If the AAA is successful, the CN transmits a WLAN AP Info Request message to the UTRAN covering the cell of the UE, requesting information on WLAN APs under the coverage of the UTRAN in step 616. In step 618, the UTRAN collects WLAN AP information and generates a WLAN AP Info Response message based on the collected information. The WLAN AP Info Response message includes the WLAN AP information such as the SSIDs, frequencies, and wireless standards of the WLAN APs accessible to the UE. In step 620, the WLAN AP Info Response message is transmitted to the CN.

In step 622, the CN transmits a WLAN Service Response message including the WLAN AP information to the UE. The WLAN AP information includes the SSIDs, frequencies, and wireless standards of the APs accessible to the UE. After the UE activates the WLAN module in step 624, it scans for a WLAN referring to the WLAN AP info through the WLAN module in step 626. If the UE is configured as illustrated in FIG. 3, it scans for the WLAN through the WLAN module, while keeping the UMTS module on. On the other hand, if the UE is configured as illustrated in FIG 2, it scans for the WLAN in a DRX mode of the mobile communication network.

While the CN requests the WLAN AP info about the cell of the UE in step 616 through step 620 in the procedure of FIG. 12, steps 616 through 620 may be omitted in the case where the CN manages WLAN AP information on a per-cell basis through a WLAN management entity. In this case, the CN generates the WLAN AP info immediately after the user AAA operation in step 614, and transmits the WLAN Service Response message including the WLAN AP info to the UE.

Thus, the present invention efficiently provides a user with interworking WLAN information, while minimizing power consumption of a UE interworking between a mobile communication network and a WLAN. By notifying the user of an accessible WLAN, the user is allowed to easily access the WLAN.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method of transmitting interworking wireless local area network (WLAN) information in a mobile communication network-WLAN interworking system, comprising the steps of:
transmitting interworking WLAN information to a dual terminal that can be connected to both a mobile communication network and a WLAN by a broadcasting message from the mobile communication network; and
establishing a connection between the dual terminal and the WLAN, upon request from the dual terminal.

2. The method of claim 1, wherein the transmission step comprises the step of transmitting interworking WLAN information on WLAN spots under coverage of a cell of the mobile communication network in which the dual terminal is located by_{.}a system information block (SIB) from a Universal Mobile Telecommunication System (UMTS) radio access network (UTRAN).

3. The method of claim 1, wherein the transmission step comprises the step of transmitting interworking WLAN information on WLAN spots within a cell in which the dual terminal is located by a cell broadcasting service (CBS) message from a cell broadcasting center connected to a UTRAN.

4. The method of claim 1, wherein the interworking WLAN information includes information on the type, identifier (ID), and radio frequency channel of a WLAN within a cell in which the dual terminal is located.

5. The method of claim 1, wherein the interworking WLAN information is a 1-bit indicator indicating whether there exists a WLAN within a cell in which the dual terminal is located.

6. The method of claim 5, further comprising the step of:
upon receipt of a message requesting information on a WLAN within the cell from the dual terminal after transmitting the indicator, transmitting to the dual terminal a response message including WLAN access point (AP) information on at least one AP supporting the WLAN.

7. The method of claim 6, wherein the WLAN AP information includes information on the service set ID (SSID) of the WLAN, and the frequency and wireless standard of the WLAN AP.

8. The method of claim 6, wherein the WLAN AP information is generated in the mobile communication network, upon request from a core network (CN).

9. The method of claim 6, wherein the WLAN AP information is generated in a core network (CN).

10. The method of claim 6, further comprising the step of:
before transmitting the response message, transmitting a user authentication request message to a CN connected to the mobile communication network and the WLAN, the user authentication request message including information on WLAN vendors to which the dual terminal has subscribed, and receiving a user authentication confirm message including the result of authenticating a user of the dual terminal from the CN.

11. A method of receiving interworking wireless local area network (WLAN) information in a dual terminal that can be connected to both a mobile communication network and a WLAN in a mobile communication network-WLAN interworking system, comprising the steps of:
receiving from the mobile communication network a broadcasting message including interworking WLAN information;
scanning for a nearby WLAN in response to the broadcasting message; and
if a WLAN accessible to the dual terminal is detected, notifying a user of the dual terminal the presence of the WLAN .

12. The method of claim 11, wherein the reception step comprises the step of receiving a system information block (SIB) from a UMTS radio access network (UTRAN), the SIB including interworking WLAN information about a WLAN spot within a cell of the mobile communication network in which the dual terminal is located.

13. The method of claim 11, wherein the reception step comprises the step of receiving a cell broadcasting service (CBS) message from a cell broadcasting center connected to a UTRAN, the SIB including, interworking WLAN information about a WLAN spot within a cell of the mobile communication network in which the dual terminal is located.

14. The method of claim 11, wherein the interworking WLAN information includes information on the type, identifier (ID), and radio frequency channel of a WLAN within the cell.

15. The method of claim 11, wherein the interworking WLAN information is a 1-bit indicator indicating whether there exists a WLAN within the cell.

16. The method of claim 15, further comprising the step of:
after receiving the indicator, transmitting a message requesting interworking WLAN information of the WLAN within the cell to the mobile communication network and receiving WLAN access point (AP) information on at least one AP supporting the WLAN from the mobile communication network.

17. The method of claim 16, wherein the WLAN AP information includes information on the service set ID (SSID) of the WLAN, and the frequency and wireless standard of the WLAN AP.

18. The method of claim 16, wherein the message transmitting step comprises the step of transmitting the request message after setup of a wireless connection to the mobile communication network.

19. The method of claim 16, wherein the request message is included in a connection request message transmitted to request the wireless connection to the mobile communication network.

20. The method of claim 16, wherein the WLAN AP information is generated in the mobile communication network, upon request from a core network (CN).

21. The method of claim 16, wherein the WLAN AP information is generated in the CN.

22. The method of claim 11, wherein the scanning step comprises the step of listening for a beacon signal from the nearby WLAN by turning on a WLAN module for connecting to the WLAN, deactivating the WLAN module if the WLAN is not detected, and scanning for the nearby WLAN by activating the WLAN module periodically.

23. The method of claim 11, wherein the notifying step comprises the step of notifying the user of dual terminal of the presence of the WLAN by one of a bell sound, vibration, or an icon.

24. The method of claim 22, further comprising the step of receiving a broadcasting message including no interworking WLAN information from the mobile communication network and turning off the WLAN module.

25. The method of claim 22, further comprising the step of:
if a connection to the detected WLAN is requested by the user of the dual terminal while the dual terminal is in an idle state or in a traffic state, establishing connection to the WLAN.

26. The method of claim 22, further comprising the step of: if an automatic handover has been set in the traffic state, performing an automatic handover from the mobile communication network to the detected WLAN and establishing a connection to the detected WLAN.

27. The method of claim 25 , further comprising the step of: if the connection is released from the WLAN, deactivating the WLAN module and scanning for a nearby WLAN by periodically activating the WLAN module.

28. The method of claim 26 , further comprising the step of: if the connection is released from the WLAN, deactivating the WLAN module and scanning for a nearby WLAN by periodically activating the WLAN module.

29. A mobile communication network-wireless local area network (WLAN) interworking system comprising:
a mobile communication base station for broadcasting a broadcasting message including interworking WLAN information about a WLAN spot within a cell; and
a dual terminal for scanning for a nearby WLAN in response to the broadcasting message, and notifying, if the WLAN is detected, a user of the dual terminal of the presence of the WLAN accessible to the dual terminal.

30. The interworking system of claim 29, wherein the mobile communication base station is a UMTS radio access network (UTRAN) that transmits interworking WLAN information on WLAN spots under coverage of a cell of the mobile communication network in which the dual terminal is located by a system information block (SIB).

31. The interworking system of claim 29, wherein the mobile communication base station is a UTRAN that receives interworking WLAN information on WLAN spots under coverage of a cell in which the dual terminal is located by a cell broadcasting service (CBS) message from a cell broadcasting center connected to the mobile communication network, and broadcasting the CBS message.

32. The interworking system of claim 30 , wherein the interworking WLAN information includes information on the type, identifier (ID), and radio frequency channel of a WLAN within the cell.

33. The interworking system of claim 31 , wherein the interworking WLAN information includes information on the type, identifier (ID), and radio frequency channel of a WLAN within the cell.

34. The interworking system of claim 30, wherein the interworking WLAN information is a 1-bit indicator indicating whether there exists a WLAN within the cell.

35. The interworking system of claim 31, wherein the interworking WLAN information is a 1-bit indicator indicating whether there exists a WLAN within the cell.

36. The interworking system of claim 29, wherein the dual terminal listens for a beacon signal from the nearby WLAN by turning on a WLAN module for connecting to the WLAN, deactivates a WLAN module if the WLAN is not detected, and scans for the nearby WLAN by activating the WLAN module periodically.

37. The interworking system of claim 29, wherein the dual terminal notifies the user of the presence of the WLAN by one of a bell sound, vibration, and an icon.

38. The interworking system of claim 29, wherein the dual terminal receives a broadcasting message including no interworking WLAN information from the mobile communication network and turns off the WLAN module.

39. The interworking system of claim 29, wherein if a connection to the detected WLAN is requested by the user of the dual terminal while the dual terminal is in an idle state or in a traffic state, the dual terminal establishes the connection to the WLAN.

40. The interworking system of claim 29, wherein if an automatic handover has been set in a traffic state, the dual terminal performs an automatic handover from the mobile communication network to the detected WLAN and establishes a connection to the detected WLAN.

41. The interworking system of claim 39 , wherein if the connection is released from the WLAN, the dual terminal deactivates a WLAN module and scans for a nearby WLAN by periodically activating the WLAN module.

42. The interworking system of claim 40 , wherein if the connection is released from the WLAN, the dual terminal deactivates a WLAN module and scans for a nearby WLAN by periodically activating the WLAN module.

43. The interworking system of claim 29, further comprising a core network (CN) for managing information on WLAN access points (APs) within each cell of the mobile communication network and transmitting, upon request from the dual terminal or the mobile communication base station, a response message including WLAN AP information on at least one AP of a WLAN within the cell to the dual terminal.

44. The interworking system of claim 43, wherein the WLAN AP information includes information on the service set ID (SSID) of the WLAN. and the frequency and wireless standard of the WLAN AP.

45. The interworking system of claim 29, wherein the mobile communication base station transmits a response message to the dual terminal upon request from the dual terminal, the response message including WLAN AP information on at least one AP of a WLAN within the cell.
